(19) Europäisches Patentamt
European Patent Office
Office européen des brevets

(11) **EP 2 605 055 A1**

(12) **EUROPÄISCHE PATENTANMELDUNG**

(43) Veröffentlichungstag:
**19.06.2013 Patentblatt 2013/25**

(51) Int Cl.:
***G02B 23/00*** *(2006.01)*

(21) Anmeldenummer: **12197091.7**

(22) Anmeldetag: **13.12.2012**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **15.12.2011 US 201161570982 P**

(71) Anmelder: **Carl Zeiss Sports Optics GmbH
35576 Wetzlar (DE)**

(72) Erfinder: **Sinn, Christian
35390 Gießen (DE)**

(74) Vertreter: **Tongbhoyai, Martin
Patentanwälte Freischem
Salierring 47-53
50677 Köln (DE)**

(54) **Fernglas zur Abbildung eines Objekts**

(57) Die Erfindung betrifft ein Fernglas zur Abbildung eines Objekts, beispielsweise auf eine Bilderfassungseinheit. Es ist wünschenswert, dass das Fernglas (und somit auch die das Fernglas bildenden optischen Einheiten bzw. optischen Elemente), mit dem eine Beobachtung eines Objekts durchgeführt wird, eine möglichst hohe Transmission aufweist. Der Erfindung liegt daher die Aufgabe zugrunde, ein Fernglas anzugeben, das eine hohe Transmission aufweist. Hierzu ist es vorgesehen, dass ein optisches Element (17A, 17B, 18A, 18B, 19A, 19B, 21A, 21 B, 21C, 21 D) aus mindestens einer der folgenden Glassorten gebildet ist: N-BK7HT, N-SK2HT, F2HT, N-LASF45HT, SF6HT, N-SF6HTultra, N-SF6HT, SF57HTultra, N-SF57HTultra, N-SF57HT sowie N-LASF9HT.

Fig. 2

EP 2 605 055 A1

**Beschreibung**

Die Erfindung betrifft ein Fernglas zur Abbildung eines Objekts, beispielsweise auf eine Bilderfassungseinheit. Dabei wird unter einem Fernglas beispielsweise ein monokulares Fernglas, ein binokulares Fernglas, ein Fernrohr oder ein Spektiv verstanden. Ferner wird unter einer Bilderfassungseinheit beispielsweise ein Auge eines Menschen oder beispielsweise ein digitales Aufnahmemedium verstanden. Als digitales Aufnahmemedium eignet sich insbesondere ein CCD.

Aus dem Stand der Technik sind Ferngläser der vorgenannten Art bekannt. In der Regel weisen die bekannten Ferngläser mindestens eine optische Einheit auf, die zur Abbildung eines Objekts verwendet wird. Beispielsweise ist die optische Einheit als Objektiv, als Okular oder als Prismensystem ausgebildet.

Jede der optischen Einheiten weist wiederum mindestens ein optisches Element oder mindestens zwei optische Elemente auf. Als optisches Element ist beispielsweise eine einzelne Linse oder eine Mehrzahl von Linsen, beispielsweise ein Kittglied, vorgesehen. Bei einem Prismensystem ist das optische Element als Prisma ausgebildet. Jedes optische Element weist Abbildungseigenschaften auf, die unter anderem durch die Transmission von auf das optische Element einfallendem Licht bestimmt ist. Die Transmission ist die Durchlässigkeit des Mediums, aus welchem das optische Element zusammengesetzt ist. Je nach der Eigenschaft des Mediums wird auf das optische Element einfallendes Licht an mindestens einer Grenzfläche des optischen Elements reflektiert oder teilweise beim Durchqueren des optischen Elements absorbiert. Ein gewisser Anteil des einfallenden Lichts, welcher nicht reflektiert und nicht absorbiert wurde, tritt aus dem optischen Element wieder aus. Dieser Anteil des Lichts wird transmittiertes Licht genannt.

Eine Größe, welche die Transmission beschreibt, ist der Transmissionsgrad $T(\lambda)$.

Dieser ist wellenlängenabhängig und wird als das Verhältnis von einer durch ein optisches Element transmittierten Lichtintensität zu einer auf das optische Element einfallenden Lichtintensität definiert. Durch eine wellenlängenabhängige Wichtung erhält man eine Transmissionszahl, welche die Eigenschaft der Transmission des optischen Elements ebenfalls beschreibt. Als Wichtungsfaktoren werden insbesondere Empfindlichkeitskurven $V(\lambda)$ des hell-adaptierten menschlichen Auges und $V'(\lambda)$ des dunkel-adaptierten menschlichen Auges verwendet. Es gilt dann:

$$T = \int_{-\infty}^{+\infty} T(\lambda) \cdot V(\lambda) d\lambda$$

$$T' = \int_{-\infty}^{+\infty} T(\lambda) \cdot V'(\lambda) d\lambda$$

T wird als Transmissionszahl bei Tagtransmission bezeichnet. T' wird als Transmission bei Nachtransmission bezeichnet.

Die Transmission eines optischen Systems (System-Transmission) wird durch die Transmission seiner einzelnen optischen Elemente bestimmt. Es ist bekannt, die System-Transmission durch einen Wert anzugeben, so dass man die Abbildungsgüte des optischen Systems erkennt.

Ferner ist es bekannt, dass bei Ferngläsern aus dem Stand der Technik die Transmission abnimmt, je mehr optische Elemente im Fernglas verbaut werden, da einfallendes Licht an immer mehr optischen Elementen reflektiert wird.

Ferner existieren Umgebungseinflüsse, welche das Beobachten eines Objekts mit einem bekannten Fernglas erschweren oder nicht möglich machen. Beispielsweise ist es schwierig, bei Dämmerung oder während der Nacht ein Objekt mit den bekannten Ferngläsern zu beobachten. Aufgrund des geringen Lichteinfalls und aufgrund der geringen Transmission des in das bekannte Fernglas einfallenden Lichts ist es schwierig, eine Abbildung von guter Qualität zu erzielen.

Es wird zusätzlich auf die WO 2004/061487 A2 und die US 2006/0238732 A1 verwiesen.

Es ist wünschenswert, dass das Fernglas (und somit auch die das Fernglas bildenden optischen Einheiten bzw. optischen Elemente), mit dem eine Beobachtung eines Objekts durchgeführt wird, eine möglichst hohe Transmission aufweist. Der Erfindung liegt daher die Aufgabe zugrunde, ein Fernglas anzugeben, das eine hohe Transmission aufweist.

Erfindungsgemäß wird diese Aufgabe durch ein Fernglas mit den Merkmalen des Anspruchs 1 gelöst. Weitere Merkmale der Erfindung ergeben sich aus der nachfolgenden Beschreibung, den beigefügten Ansprüchen und/oder den beigefügten Figuren.

Erfindungsgemäß ist das Fernglas zur Abbildung eines Objekts ausgebildet. Es weist mindestens ein optisches Element auf, welches der Abbildung des Objekts dient. Dabei wird unter einem optischen Element beispielsweise eine Linseneinheit, ein Prisma oder ein aus mehreren Prismen zusammengesetztes Prismensystem verstanden. Unter einer Linseneinheit wird dabei beispielsweise eine einzelne Linse oder eine Einheit verstanden, die aus mindestens zwei Linsen zusammengesetzt ist.

Es ist nun vorgesehen, das optische Element aus Glas auszubilden, und zwar aus mindestens einem der folgenden Gläser (Glassorten): N-BK7HT, N-SK2HT, F2HT, N-LASF45HT, SF6HT, N-SF6HTultra, N-SF6HT, SF57HTultra, N-SF57HTultra, N-SF57HT sowie N-LASF9HT. Bei den vorgenannten Gläsern handelt es sich um Gläser des Unternehmens SCHOTT.

Das erfindungsgemäße Fernglas beruht auf der überraschenden Erkenntnis, dass bei Ausbildung mindestens eines optischen Elements, das in einem Fernglas angeordnet ist, aus mindestens einem der vorstehenden Gläser sich die Transmission des Fernglases im Vergleich zum Stand der Technik deutlich verbessert. Insbesondere ist es möglich, das Fernglas zur Beobachtung und Abbildung eines Objekts bei schlechten Umgebungsverhältnissen zu verwenden, beispielsweise während einer Dämmerung oder bei Nacht.

Wenn das erfindungsgemäße Fernglas mehrere optische Elemente aufweist, so sieht es die Erfindung vor, dass zumindest eines dieser mehreren optischen Elemente durch mindestens eines der vorgenannten Gläser ausgebildet ist. Die Erfindung sieht nicht zwingend vor, dass alle der mehreren optischen Elemente durch mindestens eines der vorgenannten Gläser ausgebildet sind. Allerdings sieht eine Ausführungsform der Erfindung es durchaus vor, dass mehrere oder sogar jedes der mehreren optischen Elemente durch mindestens eines der vorgenannten Gläser ausgebildet ist. Bei einem Ausführungsbeispiel des erfindungsgemäßen Fernglas ist es vorgesehen, dass das Fernglas mindestens ein erstes optisches Element und mindestens ein zweites optisches Element aufweist, wobei das erste optische Element aus mindestens einer der vorgenannten Glassorten ausgebildet ist und wobei das zweite optische Element aus mindestens einer der vorgenannten Glassorten ausgebildet ist.

Bei einem Ausführungsbeispiel des erfindungsgemäßen Fernglases ist es zusätzlich oder alternativ vorgesehen, dass das Fernglas mindestens ein Objektiv aufweist, welches das optische Element umfasst. Bei einem weiteren Ausführungsbeispiel ist es zusätzlich oder alternativ vorgesehen, dass das Fernglas ein Okular aufweist, welches das optische Element aufweist.

Bei einem wiederum weiteren Ausführungsbeispiel des erfindungsgemäßen Fernglases ist es zusätzlich oder alternativ vorgesehen, dass eine Bilderfassungseinheit vorgesehen ist, die beispielsweise als digitales Aufnahmemedium, insbesondere als CCD, ausgebildet ist.

Wie oben bereits erwähnt, ist das optische Element beispielsweise als Linseneinheit ausgebildet. Bei einem weiteren Ausführungsbeispiel ist es zusätzlich oder alternativ vorgesehen, dass das Fernglas mindestens eine erste Linseneinheit und mindestens eine zweite Linseneinheit aufweist. Bei diesem Ausführungsbeispiel ist es vorgesehen, dass die erste Linseneinheit aus mindestens einem der vorgenannten Gläser ausgebildet ist und dass die zweite Linseneinheit aus mindestens einem der vorgenannten Gläser ausgebildet ist.

Bei einem wiederum weiteren Ausführungsbeispiel des erfindungsgemäßen Fernglases ist das optische Element als Prisma ausgebildet. Bei einem weiteren Ausführungsbeispiel des erfindungsgemäßen Fernglases weist das Fernglas mehrere Prismen auf, die als optische Elemente in dem Fernglas angeordnet sind.

Bei einem weiteren Ausführungsbeispiel des erfindungsgemäßen Fernglases ist das Fernglas als monokulares Fernglas, als binokulares Fernglas, als Fernrohr oder als Spektiv ausgebildet. Die Erfindung ist aber nicht auf die vorgenannten Ausführungsbeispiele eingeschränkt.

Die Erfindung wird nun anhand eines Ausführungsbeispiels mittels Figuren näher beschrieben. Dabei zeigen

Fig. 1    eine erste schematische Darstellung eines Fernglases; und

Fig. 2    eine zweite schematische Darstellung des Fernglases nach Figur 1.

Die Erfindung wird nachfolgend anhand eines optischen Systems in Form eines binokularen Fernglases 1 besprochen (nachfolgend nur Fernglas 1 genannt). Es wird explizit darauf hingewiesen, dass die Erfindung nicht auf ein binokulares Fernglas eingeschränkt ist. Vielmehr ist die Erfindung für jedes optische System geeignet, beispielsweise auch bei einem monokularen Fernglas, einem Fernrohr oder einem Spektiv.

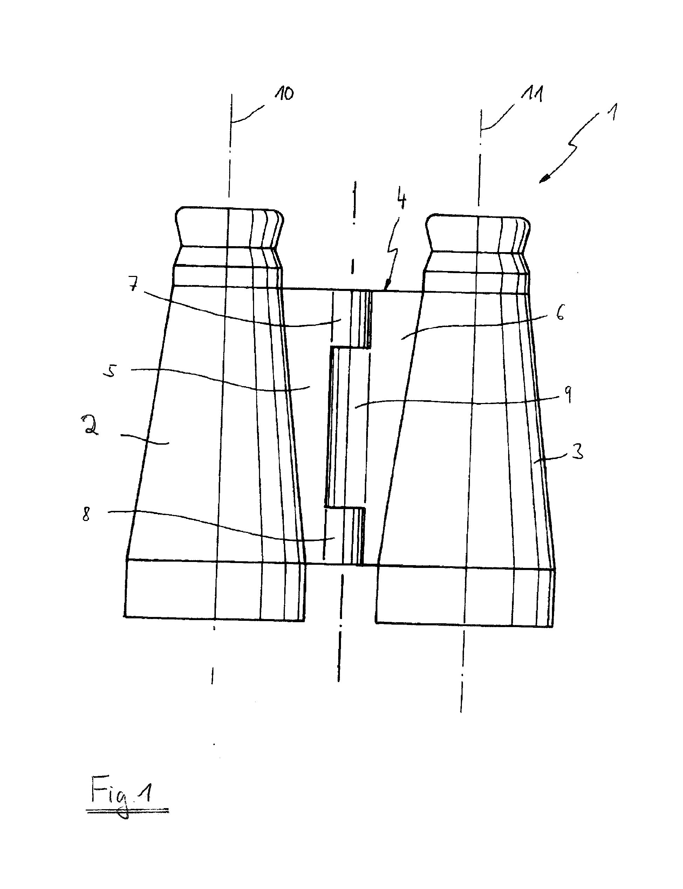

**Figur 1** zeigt eine erste schematische Darstellung des Fernglases 1, welches ein tubusförmiges erstes Gehäuseteil 2 und ein tubusförmiges zweites Gehäuseteil 3 aufweist. Durch das erste Gehäuseteil 2 verläuft eine erste optische Achse 10. Hingegen verläuft durch das zweite Gehäuseteil 3 eine zweite optische Achse 11. Das erste Gehäuseteil 2 ist mit dem zweiten Gehäuseteil 3 über eine Knickbrücke 4 miteinander verbunden. Die Knickbrücke 4 weist ein erstes Scharnierteil 5 auf, welches an dem ersten Gehäuseteil 2 angeformt ist. Ferner weist die Knickbrücke 4 ein zweites Scharnierteil 6 auf, welches an dem zweiten Gehäuseteil 3 angeordnet ist. Das erste Scharnierteil 5 weist ein erstes Aufnahmeteil 7 und ein zweites Aufnahmeteil 8 auf, zwischen denen ein drittes Aufnahmeteil 9 des zweiten Scharnierteils 6 angeordnet ist. Durch das erste Aufnahmeteil 7, das zweite Aufnahmeteil 8 sowie das dritte Aufnahmeteil 9 verläuft ein Achsbolzen (nicht dargestellt), sodass die relative Position des ersten Gehäuseteils 2 und des zweiten Gehäuseteils 3 zueinander eingestellt werden kann. Auf diese Weise ist es möglich, das erste Gehäuseteil 2 und das zweite Gehäuseteil 3 auf den Augenabstand eines Benutzers einzustellen, sodass zum einen das erste Gehäuseteil 2 an dem einen der beiden Augen des Benutzers angeordnet ist und so dass zum anderen das zweite Gehäuseteil 3 an dem anderen der beiden Augen des Benutzers angeordnet ist.

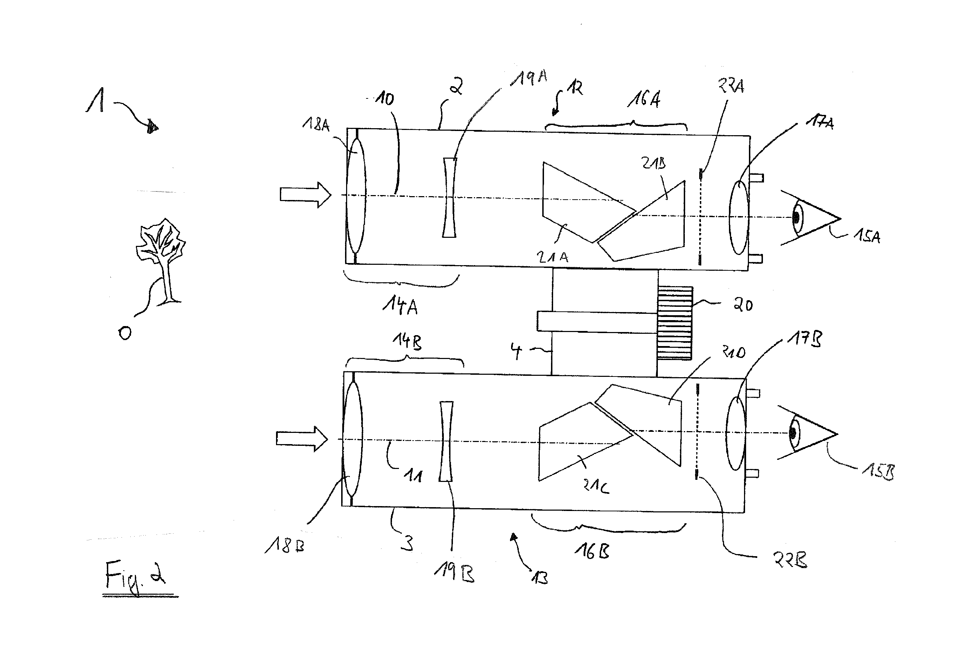

**Figur 2** zeigt eine weitere Darstellung des Fernglases 1. Das erste Gehäuseteil 2 weist ein erstes optisches Teilsystem 12 auf. Das erste optische Teilsystem 12 ist mit einem ersten Objektiv 14A, mit einem ersten Prismensystem 16A und einem ersten Okular 17A versehen. An dem ersten Okular 17A kann ein erstes Auge 15A eines Benutzers zur Beobachtung eines Objekts O angeordnet werden. Die erste optische Achse 10 des ersten optischen Teilsystems 12 wird aufgrund des ersten Prismensystems 16A lateral etwas versetzt, so dass es zu einer stufigen Ausbildung der ersten optischen Achse 10 kommt.

Das erste Objektiv 14A besteht bei diesem Ausführungsbeispiel aus einer ersten Fronteinheit 18A und einer ersten Fokussiereinheit 19A. Weitere Ausführungsformen des ersten Objektivs 14A sehen eine unterschiedliche Anzahl an einzelnen Linsen oder aus Linsen bestehenden Kittgliedern vor. Zum Zwecke einer Fokussierung des durch das Fernglas 1 betrachteten Objekts O kann entweder das erste Okular 17A oder die erste Fokussiereinheit 19A axial entlang der ersten optischen Achse 10 verschoben werden.

Das zweite Gehäuseteil 3 weist ein zweites optisches Teilsystem 13 auf. Das zweite optische Teilsystem 13 ist mit einem zweiten Objektiv 14B, mit einem zweiten Prismensystem 16B und mit einem zweiten Okular 17B versehen. An dem zweiten Okular 17B kann ein zweites Auge 15B des Benutzers zur Beobachtung des Objekts O angeordnet werden. Die zweite optische Achse 11 des zweiten optischen Teilsystems 13 wird aufgrund des zweiten Prismensystem 16B lateral etwas versetzt, so dass es zu einer stufigen Ausbildung der zweiten optischen Achse 11 kommt.

Das zweite Objektiv 14B besteht bei diesem Ausführungsbeispiel aus einer zweiten Fronteinheit 18B und einer zweiten Fokussiereinheit 19B. Weitere Ausführungsformen des zweiten Objektivs 14B sehen eine unterschiedliche Anzahl an einzelnen Linsen oder aus Linsen bestehenden Kittgliedern vor. Zum Zwecke einer Fokussierung des durch das Fernglas 1 betrachteten Objekts O kann entweder das zweite Okular 17B oder die zweite Fokussiereinheit 19B axial entlang der zweiten optischen Achse 11 verschoben werden.

Bei beiden oben dargestellten optischen Teilsystemen 12, 13 ist die Strahlrichtung der in die optischen Teilsysteme 12, 13 einfallenden Lichtstrahlen wie folgt: Objekt O - Objektiv 14A, 14B - Prismensystem 16A, 16B - Okular 17A, 17B - Auge 15A, 15B.

Zum Fokussieren ist bei dem hier dargestellten Ausführungsbeispiel an der Knickbrücke 4 ein Drehknopf 20 angeordnet, mit dem die erste Fokussiereinheit 19A und die zweite Fokussiereinheit 19B gemeinsam entlang der optischen Achsen 10 und 11 verschoben werden können.

Sowohl das erste Objektiv 14A als auch das zweite Objektiv 14B erzeugen bei dem hier dargestellten Ausführungsbeispiel ein reales, relativ zum betrachteten Objekt O auf dem Kopf stehendes Bild in einer dem jeweiligen Objektiv 14A, 14B zugeordneten Bildebene. Das dem ersten Objektiv 14A zugeordnete erste Prismensystem 16A sowie das dem zweiten Objektiv 14B zugeordnete zweite Prismensystem 16B werden zur Bildaufrichtung verwendet. Somit wird das auf dem Kopf stehende Bild wieder aufgerichtet und in einer neuen Bildebene, der linken Zwischenbildebene 22A bzw. der rechten Zwischenbildebene 22B, abgebildet. Das erste Prismensystem 16A und das zweite Prismensystem 16B können als Abbe-König-Prismensystem, Schmidt-Pechan-Prismensystem, Uppendahl-Prismensystem, Porro-Prismensystem oder einer anderen Prismensystem-Variante aufgebaut sein.

In der linken Zwischenbildebene 22A ist beispielsweise eine das Sehfeld scharf begrenzende erste Feldblende angeordnet. Ferner kann beispielsweise in der rechten Zwischenbildebene 22B eine das Sehfeld scharf begrenzende zweite Feldblende angeordnet sein.

Das erste Okular 17A wird verwendet, um das Bild der linken Zwischenbildebene 22A in eine beliebige Entfernung, z.B. ins Unendliche oder in eine andere Entfernung, abzubilden. Ferner wird das zweite Okular 17B dazu verwendet, um das Bild der rechten Zwischenbildebene 22B in eine beliebige Entfernung, z.B. ins Unendliche oder in eine andere Entfernung, abzubilden.

Die Aperturblende des ersten optischen Teilsystems 12 bzw. des zweiten optischen Teilsystems 13 (nicht dargestellt) kann entweder durch eine Fassung eines optischen Elements des entsprechenden optischen Teilsystems 12 bzw. 13 oder durch eine separate Blende gebildet sein. Sie kann in Strahlrichtung durch das entsprechende optische Teilsystem 12 bzw. 13 in eine Ebene abgebildet werden, die in Strahlrichtung hinter dem entsprechenden Okular 17A oder 17B liegt und typischerweise 5 mm bis 25 mm Abstand zu diesem hat. Diese Ebene wird Ebene der Austrittspupille genannt.

Das in den **Figuren 1 und 2** dargestellte Fernglas 1 weist mehrere optische Einheiten auf, nämlich das erste Objektiv 14A, das zweite Objektiv 14B, das erste Prismensystem 16A, das zweite Prismensystem 16B, das erste Okular 17A sowie das zweite Okular 17B. Das erste Objektiv 14A ist aus mehreren optischen Elementen zusammengesetzt, nämlich der ersten Fronteinheit 18A und der ersten Fokussiereinheit 19A. Auch das zweite Objektiv 14B weist mehrere optische Elemente auf, nämlich die zweite Fronteinheit 18B und die zweite Fokussiereinheit 19B. Das erste Prismensystem 16A setzt sich aus optischen Elementen in Form eines ersten Prismas 21A und eines zweiten Prismas 21 B zusammen. Das zweite Prismensystem 16B setzt sich aus einem dritten Prisma 21C und einem vierten Prisma 21 D zusammen. Das erste Okular 17A sowie das zweite Okular 17B werden bei diesem Ausführungsbeispiel jeweils durch ein einzelnes optisches Element, nämlich eine einzelne Linseneinheit, gebildet.

Mindestens eines der optischen Elemente des Fernglases 1 ist aus mindestens einem der folgenden Gläser (Glassorten) gebildet: N-BK7HT, N-SK2HT, F2HT, N-LASF45HT, SF6HT, N-SF6HTultra, N-SF6HT, SF57HTultra, N-SF57HTultra, N-SF57HT sowie N-LASF9HT. Insbesondere ist es vorgesehen, mindestens zwei oder jedes der vorgenannten optischen Elemente aus mindestens einem der vorgenannten Gläser auszubilden. Bei den vorgenannten Gläsern handelt es sich um Gläser des Unternehmens SCHOTT.

Die Ausbildung mindestens eines der optischen Elemente des Fernglases 1 aus mindestens einem der vorgenannten Gläser bewirkt eine höhere Transmission des Fernglases 1 als vergleichbare optische Systeme aus dem Stand der Technik. Insbesondere ist es möglich, das Fernglas 1 zur Beobachtung und Abbildung eines Objekts bei schlechten Umgebungsverhältnissen zu verwenden, beispielsweise während einer Dämmerung oder bei Nacht.

In der nachfolgenden Tabelle sind Eigenschaften der vorgenannten Gläser angegeben. Die Eigenschaften sind einer Veröffentlichung des Unternehmens SCHOTT entnommen.

| Glas | $n_d$ | $v_d$ | Tau |
|---|---|---|---|
| N-BK7HT | 1,51680 | 64,17 | 0,998 |
| N-SK2HT | 1,60738 | 56,65 | 0,996 |
| F2HT | 1,62004 | 36,37 | 0,996 |
| N-LASF45HT | 1,80107 | 34,97 | 0,886 |
| SF6HT | 1,80518 | 25,43 | 0,941 |
| N-SF6HTultra | 1,80518 | 25,36 | 0,887 |
| N-SF6HT | 1,80518 | 25,36 | 0,877 |
| SF57HTultra | 1,84666 | 23,83 | 0,924 |
| N-SF57HTultra | 1,84666 | 23,78 | 0,830 |
| N-SF57HT | 1,84666 | 23,78 | 0,793 |
| N-LASF9HT | 1,85025 | 32,17 | 0,843 |

In der Tabelle sind die einzelnen Glassorten angegeben, wobei die Notation der Glassorten sich auf Glassorten des Unternehmens SCHOTT bezieht. Darüber hinaus sind in der Tabelle mit $n_d$ die Brechzahl und mit $v_d$ die Abbezahl bezeichnet. Ferner ist mit $Tau_i$ der Transmissionsgrad angegeben, also das Verhältnis des auf das optische Element einfallenden Lichts und des transmittierten Lichts. Die in der vorgenannten Tabelle angegebenen Werte beziehen sich auf ein optisches Element von 10mm Dicke und bei einem einfallenden Licht mit einer Wellenlänge von 400nm.

Bei einem weiteren Ausführungsbeispiel ist es vorgesehen, bei dem Fernglas 1 mindestens ein optisches Element zu verwenden, das aus mindestens einem der vorgenannten Glassorten ausgebildet ist. Zusätzlich kann diese Glassorte bleihaltig gebildet sein. Diese Glassorte weist eine ins Kurzwellige verschobene Absorptionskante auf. Zusätzlich oder alternativ ist es vorgesehen, ein zusätzliches optisches Element bei dem Fernglas 1 zu verwenden, das aus einem bleihaltigen Glas gebildet ist.

**Bezugszeichenliste**

| | |
|---|---|
| 1 | Fernglas |
| 2 | erstes Gehäuseteil |
| 3 | zweites Gehäuseteil |
| 4 | Knickbrücke |
| 5 | erstes Scharnierteil |
| 6 | zweites Scharnierteil |
| 7 | erstes Aufnahmeteil |
| 8 | zweites Aufnahmeteil |
| 9 | drittes Aufnahmeteil |
| 10 | erste optische Achse |
| 11 | zweite optische Achse |
| 12 | erstes optisches Teilsystem |
| 13 | zweites optisches Teilsystem |
| 14A | erstes Objektiv |
| 14B | zweites Objektiv |
| 15A | erstes Auge |
| 15B | zweites Auge |
| 16A | erstes Prismensystem |
| 16B | zweites Prismensystem |
| 17A | erstes Okular |
| 17B | zweites Okular |
| 18A | erste Fronteinheit |
| 18B | zweite Fronteinheit |
| 19A | erste Fokussiereinheit |
| 19B | zweite Fokussiereinheit |
| 20 | Drehknopf |
| 21A | erstes Prisma |

21B    zweites Prisma

21C    drittes Prisma

21D    viertes Prisma

22A    linke Zwischenbildebene

22B    rechte Zwischenbildebene

O    Objekt

**Patentansprüche**

1.  Fernglas (1) zur Abbildung eines Objekts (O), mit

    - mindestens einem optischen Element (17A, 17B, 18A, 18B, 19A, 19B, 21A, 21 B, 21C, 21 D) aus Glas,

    **dadurch gekennzeichnet,**
    **dass** das optische Element (17A, 17B, 18A, 18B, 19A, 19B, 21A, 21B, 21C, 21 D) aus mindestens einer der folgenden Glassorten gebildet ist: N-BK7HT, N-SK2HT, F2HT, N-LASF45HT, SF6HT, N-SF6HTultra, N-SF6HT, SF57HTultra, N-SF57HTultra, N-SF57HT sowie N-LASF9HT.

2.  Fernglas (1) nach Anspruch 1, **dadurch gekennzeichnet, dass** das Fernglas (1) mindestens ein Objektiv (14A, 14B) aufweist, welches das optische Element (18A, 18B, 19A, 19B) umfasst.

3.  Fernglas (1) nach Anspruch 1 oder 2, **dadurch gekennzeichnet, dass** das Fernglas (1) mindestens ein Okular (17A, 17B) aufweist, welches das optische Element umfasst.

4.  Fernglas (1) nach einem der vorangehenden Ansprüche, **dadurch gekennzeichnet, dass** das Fernglas (1) eine Bilderfassungseinheit aufweist, die als digitales Aufnahmemedium ausgebildet ist.

5.  Fernglas (1) nach einem der vorangehenden Ansprüche, **dadurch gekennzeichnet, dass** das optische Element (17A, 17B, 18A, 18B, 19A, 19B) als Linseneinheit ausgebildet ist.

6.  Fernglas (1) nach Anspruch 5, **dadurch gekennzeichnet, dass**

    - die Linseneinheit (17A, 18A, 19A) als erste Linseneinheit ausgebildet,
    - das Fernglas (1) mindestens eine zweite Linseneinheit (17B, 18B, 19B) aufweist, und dass
    - die zweite Linseneinheit (17B, 18B, 19B) aus mindestens einer der folgenden Glassorten gebildet ist:

    N-BK7HT, N-SK2HT, F2HT, N-LASF45HT, SF6HT, N-SF6HTultra, N-SF6HT, SF57HTultra, N-SF57HTultra, N-SF57HT sowie N-LASF9HT.

7.  Fernglas (1) nach einem der vorangehenden Ansprüche, **dadurch gekennzeichnet, dass** das optische Element (21A bis 21 D) als Prisma ausgebildet ist.

8.  Fernglas (1) nach einem der vorangehenden Ansprüche, **dadurch gekennzeichnet, dass** das Fernglas (1) als monokulares Fernglas, als binokulares Fernglas, als Fernrohr oder als Spektiv ausgebildet ist.

Fig. 1

Fig. 2

**Europäisches Patentamt**
**European Patent Office**
**Office européen des brevets**

## EUROPÄISCHER RECHERCHENBERICHT

Nummer der Anmeldung

EP 12 19 7091

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 94/20873 A1 (BENOPCON INC [US]) 15. September 1994 (1994-09-15) * Zusammenfassung; Abbildungen * * Tabellen 1-5 * ----- | 1-8 | INV. G02B23/00 |
| Y | US 5 796 523 A (HALL JOHN M [US]) 18. August 1998 (1998-08-18) * Abbildungen 1,2 * * Tabelle 1 * ----- | 1-8 | |
| Y | FR 67 581 E (ZEISS CARL) 14. März 1958 (1958-03-14) * das ganze Dokument * ----- | 1-8 | |
| Y | "Optical Glass - Data Sheets", , 1. März 2011 (2011-03-01), XP055055748, Gefunden im Internet: URL:http://www.schott.com/advanced_optics/us/abbe_datasheets/schott_datasheet_all_us.pdf [gefunden am 2013-03-07] * das ganze Dokument * ----- | 1-8 | |

**RECHERCHIERTE SACHGEBIETE (IPC)**

G02B

Der vorliegende Recherchenbericht wurde für alle Patentansprüche erstellt

| Recherchenort | Abschlußdatum der Recherche | Prüfer |
|---|---|---|
| München | 8. März 2013 | Windecker, Robert |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 12 19 7091

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-03-2013

| Im Recherchenbericht angeführtes Patentdokument | | Datum der Veröffentlichung | Mitglied(er) der Patentfamilie | | | Datum der Veröffentlichung |
|---|---|---|---|---|---|---|
| WO 9420873 | A1 | 15-09-1994 | AU | 6358494 | A | 26-09-1994 |
| | | | CZ | 9502285 | A3 | 11-09-1996 |
| | | | DE | 69431749 | D1 | 02-01-2003 |
| | | | DE | 69431749 | T2 | 17-07-2003 |
| | | | EP | 0688439 | A1 | 27-12-1995 |
| | | | JP | 3524925 | B2 | 10-05-2004 |
| | | | JP | H08507882 | A | 20-08-1996 |
| | | | US | 5371626 | A | 06-12-1994 |
| | | | US | 5499140 | A | 12-03-1996 |
| | | | US | 5500769 | A | 19-03-1996 |
| | | | US | 5532875 | A | 02-07-1996 |
| | | | US | 5576888 | A | 19-11-1996 |
| | | | WO | 9420873 | A1 | 15-09-1994 |
| US 5796523 | A | 18-08-1998 | KEINE | | | |
| FR 67581 | E | 14-03-1958 | KEINE | | | |

EPO FORM P0461

Für nähere Einzelheiten zu diesem Anhang : siehe Amtsblatt des Europäischen Patentamts, Nr.12/82

**EP 2 605 055 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004061487 A2
- US 20060238732 A1